# EUROPEAN PATENT APPLICATION

(11) **EP 4 657 275 A1**
(43) Date of publication of application: **03.12.2025**
(21) Application number: 24810006.7
(22) Date of filing: 04.03.2024
(51) Int. Cl.: G06F 16/22

(54) **SUB-APPLICATION RUNNING METHOD AND APPARATUS, AND COMPUTER DEVICE AND STORAGE MEDIUM**

(30) Priority: 23.05.2023 CN 202310594979
(71) Applicant: Tencent Technology (Shenzhen) Company Limited, Shenzhen, Guangdong 518057 (CN)
(72) Inventor: LIU, Yang, Shenzhen, Guangdong 518057 (CN); SU, Runzi, Shenzhen, Guangdong 518057 (CN); DENG, Kunli, Shenzhen, Guangdong 518057 (CN); SUN, Cong, Shenzhen, Guangdong 518057 (CN); HUANG, Canhui, Shenzhen, Guangdong 518057 (CN)
(74) Representative: AWA Sweden AB
(86) International application number: PCT/CN2024/079896
(87) International publication number: WO 2024/239757

(57) **Abstract**

The present application relates to a sub-application running method and an apparatus , and a computer device, a storage medium, and a computer program product. The method can be applied to the field of computer software, for example, to a scenario where a sub-application is run by means of application programs installed in a vehicle-mounted device and other smart terminals. The method comprises: when a service page displayed by means of an application program comprises a sub-application identifier, initiating a sub-application running request in response to a trigger operation for the sub-application identifier (step 202); when the sub-application running request is acquired by a virtual server, acquiring, by means of the virtual server, a compiled program package corresponding to the sub-application identifier, and parsing the program to obtain file data (step 204); and on the basis of the file data, running in the application program a sub-application corresponding to the sub-application identifier (step 206).

## Description

### RELATED APPLICATION

This application claims priority to Chinese Patent Application No. 2023105949799, filed with the China National Intellectual Property Administration on May 23, 2023 and entitled "METHOD AND APPARATUS FOR RUNNING CHILD APPLICATION, COMPUTER DEVICE, AND STORAGE MEDIUM", which is incorporated by reference in its entirety.

### FIELD OF THE TECHNOLOGY

This application relates to the field of computer technologies, and in particular, to a method and an apparatus for running a child application, a computer device, a storage medium, and a computer program product.

### BACKGROUND OF THE DISCLOSURE

With the development of computer technologies, various application programs provide much convenience for users, and working, obtaining information, and shopping online through the application programs become an indispensable part of daily life.

Currently, when the users need to use a child application in a process of browsing a web page, the users usually need to use a mobile terminal to scan a graphic code of the child application, and use the child application in the mobile terminal. This operation is complex and has low efficiency.

### SUMMARY

According to various aspects provided in this disclosure, a method and an apparatus for running a child application within a first parent application on a terminal, a computer device, a computer-readable storage medium, and a computer program product are provided.

According to a first aspect, this application provides a method for running a child application within a first parent application on a terminal, and the method including
displaying, via a first parent application on a terminal, a service page including an entry of a child application; initiating, in response to a user operation on the entry of the child application, a request to run the child application; in response to the request, obtaining, via a virtual server configured in the terminal, a compiled application package corresponding to the child application, and parsing, via the virtual server, the compiled application package to obtain file data associated with the child application; running the child application in the first parent application based on the file data.

According to a second aspect, this application further provides an apparatus for running a child application. The apparatus includes:
a triggering module, configured to: display, via a first parent application on a terminal, a service page including an entry of a child application; initiate, in response to a user operation on the entry of the child application, a request to run the child application;
a file data obtaining module, configured to: in response to the request, obtain, via a virtual server configured in the terminal, a compiled application package corresponding to the child application; parse, via the virtual server, the compiled application package to obtain file data associated with the child application; and
a child application running module, configured to run the child application in the first parent application based on the file data.

According to a third aspect, this application further provides a computer device, including a memory and one or more processors, the memory having computer-readable instructions stored therein, and the computer-readable instructions, when executed by the processor, causing the one or more processors to perform the following operations:
displaying, via a first parent application on a terminal, a service page including an entry of a child application; initiating, in response to a user operation on the entry of the child application, a request to run the child application; in response to the request, obtaining, via a virtual server configured in the terminal, a compiled application package corresponding to the child application, and parsing, via the virtual server, the compiled application package to obtain file data associated with the child application; running the child application in the first parent application based on the file data.

According to a fourth aspect, this application further provides one or more non-volatile readable storage media, having computer-readable instructions stored therein, the computer-readable instructions, when executed by the processor, implementing the following operations:
displaying, via a first parent application on a terminal, a service page including an entry of a child application; initiating, in response to a user operation on the entry of the child application, a request to run the child application; in response to the request, obtaining, via a virtual server configured in the terminal, a compiled application package corresponding to the child application, and parsing, via the virtual server, the compiled application package to obtain file data associated with the child application; running the child application in the first parent application based on the file data.

According to a fifth aspect, this application further provides a computer program product, including computer-readable instructions, the computer-readable instructions, when executed by a processor, implementing the following operations:
displaying, via a first parent application on a terminal, a service page including an entry of a child application; initiating, in response to a user operation on the entry of the child application, a request to run the child application; in response to the request, obtaining, via a virtual server configured in the terminal, a compiled application package corresponding to the child application, and parsing, via the virtual server, the compiled application package to obtain file data associated with the child application; running the child application in the first parent application based on the file data.

Details of one or more embodiments of this application are described in accompanying drawings and descriptions below. Other features, objects, and advantages of this application are apparent from the descriptions, accompanying drawings, and claims.

### BRIEF DESCRIPTION OF THE DRAWINGS

To describe technical solutions in embodiments of this application more clearly, the following briefly describes accompanying drawings needed for describing the embodiments. Apparently, the accompanying drawings in the following descriptions show merely exemplary embodiments of this application, and a person of ordinary skill in the art may still derive other drawings from these accompanying drawings without creative efforts.
FIG. 1 is an application environment diagram of a method for running a child application according to an embodiment.
FIG. 2a is a schematic diagram of an application scenario of a method for running a child application according to an embodiment.
FIG. 2b is a schematic flowchart of a method for running a child application according to an embodiment.
FIG. 3 is a schematic diagram of displaying a child application identifier on a service page according to an embodiment.
FIG. 4 is a schematic diagram of running a child application on a newly-created page according to an embodiment.
FIG. 5 is a schematic diagram of running a child application on a sub-page of a service page according to an embodiment.
FIG. 6 is a schematic structural diagram of a child application runtime according to an embodiment.
FIG. 7 is a schematic diagram of obtaining file data by a virtual server according to an embodiment.
FIG. 8 is a schematic flowchart of running a child application in an application program according to an embodiment.
FIG. 9 is a schematic flowchart of transmitting a parent application interface invoking request according to an embodiment.
FIG. 10 is a schematic diagram of starting a mini program through a browser according to an embodiment.
FIG. 11 is a schematic diagram of a problem detail page of a mini program according to an embodiment.
FIG. 12 is a schematic diagram of starting a mini program by scanning a graphic code of the mini program in a browser through a mobile device in the related art.
FIG. 13 is a schematic flowchart of a method for running a child application according to another embodiment.
FIG. 14 is a structural block diagram of an apparatus for running a child application according to an embodiment.
FIG. 15 is an internal structural diagram of a computer device according to an embodiment.

### DESCRIPTION OF EMBODIMENTS

To make objectives, technical solutions, and advantages of this application clearer, this application is further described in detail with reference to the accompanying drawings and embodiments. Specific embodiments described herein are merely used to explain this application but are not intended to limit this application.

In this specification and the accompanying drawings, operations and elements that are basically the same or similar are represented by using the same or similar reference signs, and repeated descriptions of these operations and elements are omitted. In addition, in the descriptions of this application, the terms such as "first" and "second" are configured to only distinguish descriptions, and cannot be understood as indicating or implying relative importance or ranking.

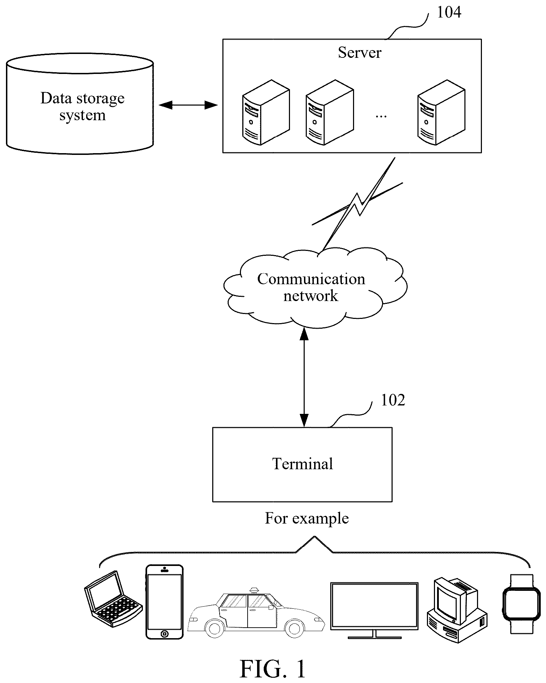

A method for running a child application provided in the embodiments of this application may be applied to an application environment shown in FIG. 1. A terminal 102 communicates with a server 104 through a network. A data storage system may store data that the server 104 needs to process. The data storage system may be integrated on the server 104, or placed on a cloud or another network server.

The terminal displays, via a first parent application on a terminal, a service page including an entry of a child application. The first parent application refers to an application running in an operating system of the terminal. The first parent application is a software designed to accomplish specific tasks (such as office work, entertainment, communication, etc.), running on a platform provided by an operating system and relying on the support of the operating system to function properly. The entry refers to an element or interaction point in the service page of the first parent application, is used to launch a child application. The entry serves as an entry point for users to trigger execution of the child application, connecting user operations with the program startup process. The entry may be in the form of a graphic display element on the service page, e.g., an icon, a hyperlink, an option in a menu, etc. The entry may be associated with the identifier of the child application in the terminal so that a trigger operation on the entry causes the terminal to run the child application associated with the entry, as such, the entry of a child application is also simply referred to as a child application identifier. The terminal may initiate, in response to a user operation on the entry of the child application, a request to run the child application. In response to the request, the terminal obtains, via a virtual server configured in the terminal, a compiled application package corresponding to the child application, and parses, via the virtual server, the compiled application package to obtain file data associated with the child application. The terminal runs the child application in the first parent application based on the file data.

The terminal 102 may be a smartphone, a tablet computer, a notebook computer, a desktop computer, a smart speaker, a smartwatch, an Internet of Things device, or a portable wearable device. The Internet of Things device may be a smart speaker, a smart television, a smart air conditioner, a smart in-vehicle device, or the like. The portable wearable device may be a smart watch, a smart bracelet, a head-mounted device, or the like.

The server 104 may be an independent physical server, or may be a service node in a block chain system. A peer to peer (P2P) network is formed between service nodes in the block chain system. A P2P protocol is an application-layer protocol running over a transmission control protocol (TCP).

In addition, the server 104 may alternatively be a server cluster including a plurality of physical servers, or may be a cloud server that provides a cloud service, a cloud database, cloud computing, a cloud function, cloud storage, a network service, cloud communication, a middleware service, a domain name service, a security service, a content delivery network (CDN), and a basic cloud computing service such as big data and an artificial intelligence platform.

The terminal 102 may be connected to the server 104 in a communication connection manner such as Bluetooth, a universal serial bus (USB), or a network. This is not limited in this application herein.

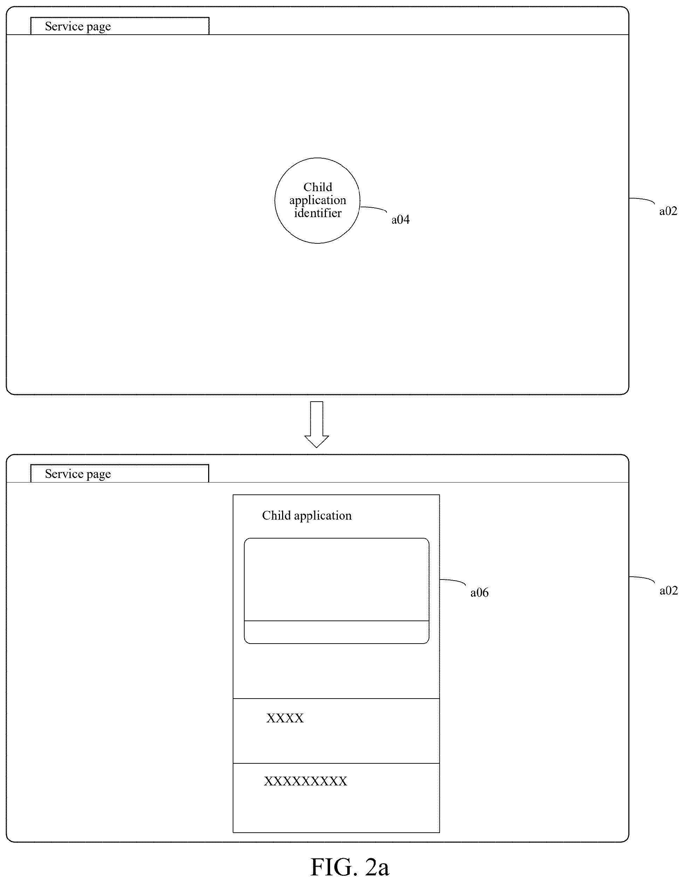

The method for running a child application provided in the embodiments of this application may be applied to an application scenario shown in FIG. 2a. A service page a02 is displayed through an application program of a terminal; a child application identifier a04 is displayed on the service page a02; a child application running request is initiated in response to a trigger operation on the child application identifier a04; when the child application running request is obtained by a virtual server, a compiled package corresponding to the child application identifier a04 is obtained through the virtual server, and the package is parsed to obtain file data; and a child application a06 corresponding to the child application identifier is run in the application program based on the file data.

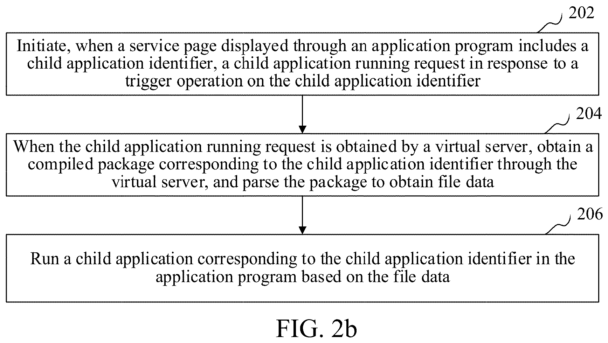

In the embodiments of the present disclosure including the embodiments of both the claims and the specification (hereinafter referred to as "all embodiments of the present disclosure"), as shown in FIG. 2b, a method for running a child application is provided. An example in which the method is performed by the terminal in FIG. 1 is used for description, and the method includes the following operations.

Operation 202: Initiate, when a service page displayed through an application program includes a child application identifier, a child application running request in response to a trigger operation on the child application identifier.

The application program may be a browser. The page is a page, namely, a web page, displayed in the browser. The service page is a page configured for executing a service, that is, a service may be executed on the service page of the browser. For example, the service page is developed for a service, and the service page may be displayed in the browser through an access address of the service page.

For example, the service may be a service for developing the child application, and a service page configured for developing the child application is displayed through the browser, so that the child application may be developed on the service page displayed in the browser. The service may alternatively be a service for customizing a public account, and a service page configured for customizing the public account is displayed through the browser, so that the public account may be customized on the service page displayed in the browser.

The child application is related to the service executed on the service page. For example, the service executed on the service page includes a plurality of links. The child application may be configured to execute at least one link included in the service. The child application identifier may be an identifier for starting the child application, and may be understood as a form in which an entry of the child application is displayed on the service page, that is, triggering the child application identifier is equivalent to triggering the entry of the child application. The entry of the child application is configured to start the child application, that is, the child application may be run in the application program through the child application identifier displayed on the service page.

In an actual application, the child application may be a mini program, that is, the at least one link in the service executed on the service page may be implemented through the mini program. When the application program is the browser, and the child application is the mini program, in the embodiments of this application, the mini program may be run in the browser. Because data needed for running the mini program is small, time consumption of loading the needed data is small when the mini program is run through the browser, so that the mini program can be quickly and conveniently entered.

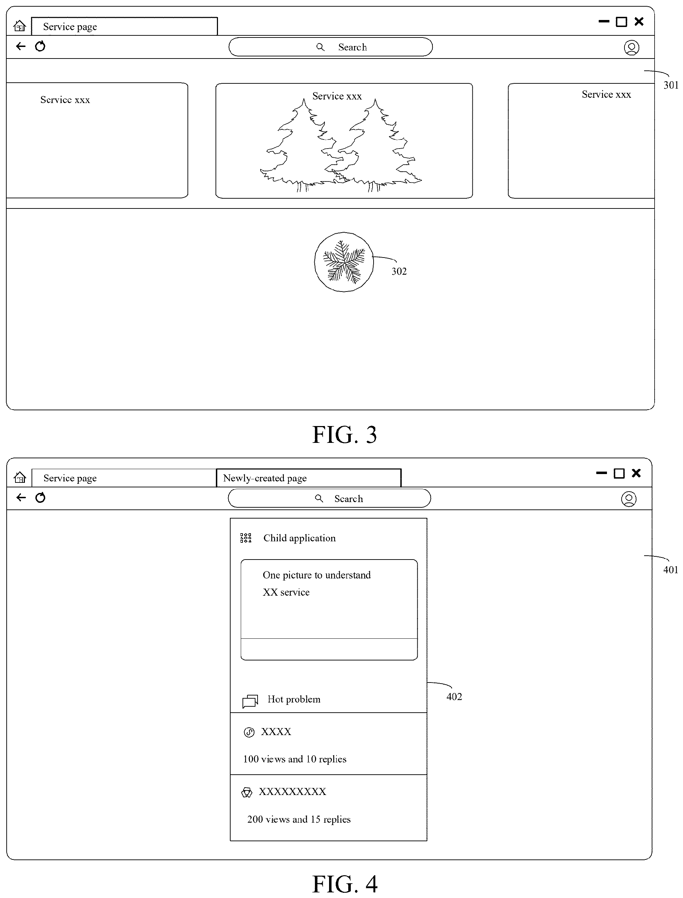

For example, the application program is the browser, and the child application is the mini program. As shown in FIG. 3, the browser is run on the terminal, a service page 301 is displayed in the browser, a corresponding service may be executed through the service page 301, and the service page 301 includes a child application identifier 302 corresponding to the entry of the mini program.

The trigger operation may be a click operation, a touch and hold operation, a slide operation, or certainly another operation configured for indicating selection of the child application identifier. The trigger operation may be performed by a target object on the child application identifier on the service page, the target object may be an object logging in to a service account through the service page, and the service account is an account of the target object on the service page.

For example, the target object logs in to the service account of the target object on the service page. In a process of browsing the service page, the target object performs the click operation, the touch and hold operation, or the slide operation on the child application identifier on the service page, to implement the trigger operation on the child application identifier.

The child application running request is configured for starting the child application, and may be specifically configured for obtaining data needed for starting the child application.

In all embodiments of the present disclosure, when the application program is run on the terminal, and the service page displayed in the application program includes the child application identifier, the terminal initiates the child application running request in response to that the target object performs the trigger operation on the child application identifier on the service page.

For example, when the application program is the browser, and the child application is the mini program, for the child application identifier displayed on the service page of the browser, the terminal initiates the child application running request in response to the trigger operation performed by the target object on the child application identifier, and the child application running request is configured for starting the mini program in the application program.

Operation 204: When the child application running request is obtained by a virtual server, obtain a compiled package corresponding to the child application identifier through the virtual server, and parse the package to obtain file data.

The terminal includes the virtual server, the virtual server is run on a service thread of the application program, the service thread is a regular thread of the application program, and the virtual server may provide a static resource processing service for the application program.

The package obtained by the virtual server is the compiled application package needed for starting the child application. Because the virtual server obtains the compiled application package, the virtual server may directly use the package to run the child application without compiling a source code of the child application, so that efficiency of running the child application in the application program is high, and a process of wakening the child application through the application program is smoother.

The file data is data obtained by parsing the package, and the file data is also data needed for running the child application. In an actual application, the package is also referred to as a code package, and correspondingly, the file data is data obtained by unpackaging the code package.

In all embodiments of the present disclosure, the terminal further includes a class library, the class library is encapsulated with methods for running the child application, and the class library is running on a main thread of the application program. The child application running request is generated through the class library, and the child application running request is transmitted to the virtual server run on the service thread. The virtual server obtains the compiled package of the child application based on the child application running request, and parses the package to obtain the file data.

In all embodiments of the present disclosure, the child application running request includes an identity number (AppID) of the child application, the identity number is a unique number of the child application, and the child application identifier may be associated with the package through the identity number. After obtaining the child application running request, the virtual server obtains the AppID included in the child application running request, and the virtual server obtains the compiled package corresponding to the AppID.

In all embodiments of the present disclosure, the application program is a first parent application of the child application, and the child application may alternatively be run in a second parent application. The compiled package of the child application may be a package used for running the child application in the second parent application. To be specific, in the first parent application and the second parent application, the child application may be run through a same package, so that there is no need to additionally develop a package for the first parent application, thereby saving development resources. In addition, the child application used through the first parent application and the child application used through the second parent application have a same human-computer interaction interface and a same use function, so that the child application used through the first parent application can provide same use experience as the child application used through the second parent application.

In all embodiments of the present disclosure, the second parent application may be an instant communication application. When the application program is the browser, and the child application is the mini program, the virtual server obtains a compiled package of the mini program based on an AppID of the mini program. The package may be a package used for running the mini program in the instant communication application, so that running the mini program in the browser provides same use experience as running the mini program in the instant communication application.

Operation 206: Run a child application corresponding to the child application identifier in the application program based on the file data.

In all embodiments of the present disclosure, after the file data is obtained by parsing the package through the virtual server, the data needed for running the child application is obtained from the file data through the virtual server, and the terminal runs the child application in the application program based on the data needed for running the child application.

In all embodiments of the present disclosure, the terminal initiates a resource request. The virtual server intercepts the resource request, and returns a corresponding child application entry file based on the resource request. The terminal executes the child application entry file. In a process of executing the child application entry file, the terminal obtains, based on the child application entry file, the data needed for running the child application from the file data obtained by the virtual server. The terminal runs the child application in the application program based on the data needed for running the child application.

In all embodiments of the present disclosure, the application program is the browser, the service page is a page displayed in the browser, and the terminal displays a newly-created page in the browser in response to the trigger operation on the child application identifier displayed on the service page, and initiates the child application running request. When the child application running request is obtained by the virtual server, the compiled package corresponding to the child application identifier is obtained through the virtual server, and after the package is parsed to obtain the file data, the child application is run based on the file data on the newly-created page of the browser. In other words, wakening the child application through the browser may be displaying the running child application on the newly-created page of the browser.

For example, the child application is the mini program. Referring to FIG. 3 and FIG. 4, the service page 301 is displayed in the browser. In response to the trigger operation on the child application identifier 302 on the service page 301, a newly-created page 401 is displayed in the browser, to facilitate subsequent displaying of a running mini program on the newly-created page 401. When the browser completes starting of the mini program, a main page 402 of the mini program is displayed on the newly-created page 401.

In all embodiments of the present disclosure, in response to the trigger operation on the child application identifier displayed on the service page, the terminal displays a sub-page on the service page, initiates the child application running request, and after obtaining the file data through the virtual server, runs the child application on the sub-page of the service page based on the file data. In other words, wakening the child application through the browser may be displaying the running child application on the sub-page of the service page.

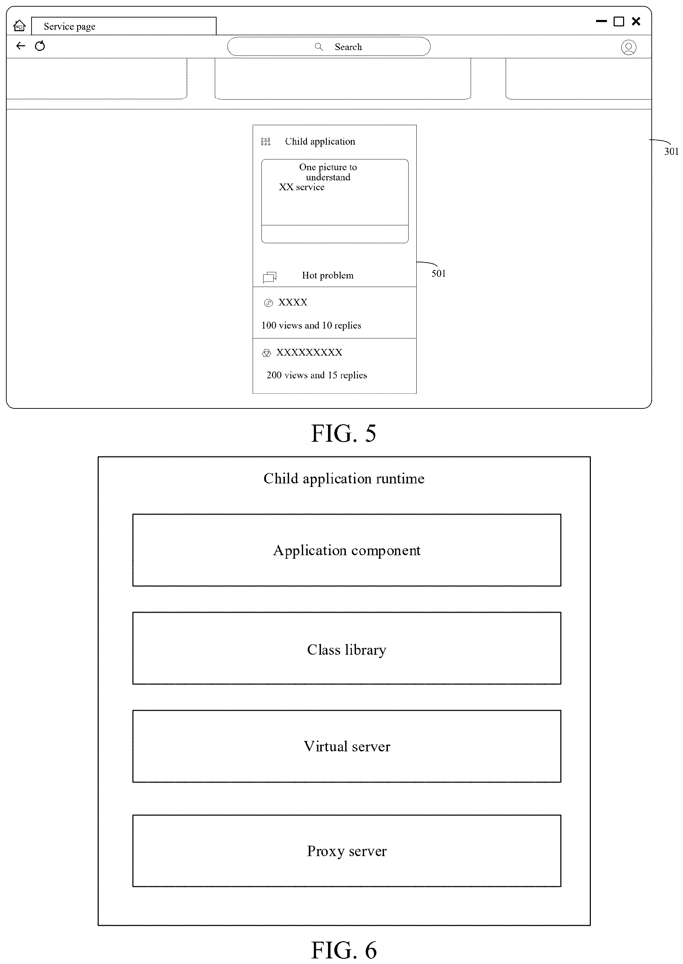

For example, the child application is the mini program. Referring to FIG. 3 and FIG. 5, the service page 301 is displayed in the browser. In response to the trigger operation on the child application identifier 302 on the service page 301, a sub-page 501 is displayed on the service page 301, to facilitate subsequent displaying of a running mini program on the sub-page 501. The sub-page 501 is a main page of the mini program.

In the foregoing method for running a child application, when the service page displayed through the application program includes the child application identifier, in response to the trigger operation on the child application identifier, the child application running request is initiated. When the child application running request is obtained by the virtual server, the compiled package corresponding to the child application identifier is obtained through the virtual server, the package is parsed to obtain the file data, and the child application is run in the application program through the file data. In other words, the child application may be directly run in the application program by triggering the child application identifier on the service page of the application program. Compared with a solution in the related art in which a mobile device scans a graphic code of the child application displayed in the application program and the child application is run in the mobile device, the child application is directly run in the application program, which greatly reduces operation complexity of running the child application and improves efficiency of running the child application. In addition, because the virtual server obtains the compiled package, the virtual server may directly parse the package, and run, through the file data obtained through parsing, the child application without executing a compiling process, so that efficiency of running the child application in the application program is high, and a process of wakening the child application through the application program is smoother.

In all embodiments of the present disclosure, the initiating a child application running request in response to a trigger operation on the child application identifier includes: initiating a class library interface invoking request through an application component of the application program in response to the trigger operation on the child application identifier, the class library interface invoking request being configured for indicating a class library to initiate the child application running request to the virtual server.

The application component is a component on the service page, that is, the service page may be a complete page obtained by packaging a plurality of components. The application component may be a component in which an entry of the child application is encapsulated, and the child application identifier may be understood as a visual form of the application component.

**In** an actual application, the application component may be a component implemented based on Vue, or may be a component implemented based on React. Vue and React are both user interface frameworks of JavaScript (a programming language), and may be configured for developing components. In this way, the method for running a child application may conveniently access a page implemented based on Vue and React.

The class library encapsulates each method for running a child application, is run at a main line layer of the application program, and may be configured to initiate the child application running request. The class library interface invoking request is a request for invoking a class library interface.

**In** all embodiments of the present disclosure, the trigger operation on the child application identifier may be understood as the trigger operation on the application component corresponding to the child application identifier. When the application component corresponding to the child application identifier receives the trigger operation, the class library interface invoking request is initiated through the application component. The class library interface invoking request is configured for invoking the class library interface, to achieve an access to the class library. When receiving the class library interface invoking request initiated through the application component, the class library initiates the child application running request to the virtual server.

**In** all embodiments of the present disclosure, the child application running request is a request configured for initializing the child application. When the application component corresponding to the child application identifier receives the trigger operation, the class library interface invoking request is initiated through the application component. When receiving the class library interface invoking request, the class library triggers initialization of the child application, to initiate the child application running request to the virtual server, to request to initialize the child application.

**In** all embodiments of the present disclosure, the child application may be the mini program, and the child application identifier displayed on the service page is triggered. The class library interface invoking request is initiated through the application component. When receiving the class library interface invoking request initiated through the application component, the class library initiates the child application running request to the virtual server, to request to initialize the mini program.

In the foregoing embodiments, the service page may be the complete page obtained by packaging the plurality of components, and the entry of the child application is encapsulated into the application component corresponding to the child application identifier. In this way, the entry of the child application may be accessed to different service pages without additional improvement of an implementation framework of the service page, so that the method for running a child application may be directly applied to an existing page, thereby improving adaptability of the method for running a child application.

In all embodiments of the present disclosure, the application program is the first parent application of the child application. When the child application running request is obtained by the virtual server, the obtaining a compiled package corresponding to the child application identifier through the virtual server, and parsing the package to obtain file data includes: downloading, via the virtual server, the compiled package corresponding to the child application identifier from a target server, the target server being configured to provide services for a second parent application on the terminal, and the first parent application and the second parent application being different application programs.

That the target server is configured to run the second parent application of the child application refers to that when the second parent application is run, communication with the target server needs to be performed, to obtain data needed for running the second parent application and provide another service for the second parent application. When the child application is run in the second parent application, communication with the target server also needs to be performed, to obtain the data needed for running the child application. The target server may be understood as a background server of the second parent application.

The package of the child application may be a package obtained by compiling by using an official development tool of the second parent application. To be specific, the package obtained by the virtual server is the same as a package loaded when the child application is started in the second parent application.

In the related art, the child application is usually run in the second parent application. Therefore, the compiled package of the child application is an existing package. The virtual server may directly obtain, without additionally developing the package for the application program, the package used for running the child application in the second parent application, thereby reducing time consumption and costs of implementing the method for running a child application.

For example, the second parent application is the instant communication application, and the child application is the mini program. In an actual application, the mini program is mainly run in the instant communication application. The background server (the target server) of the instant communication application has a package of the mini program. When the mini program is run in the browser, the virtual server may directly obtain the package of the mini program from the background server of the instant communication application.

In all embodiments of the present disclosure, the virtual server determines a download address of the package based on the child application running request, and obtains the compiled package of the child application from the target server based on the download address of the package.

In all embodiments of the present disclosure, the child application running request includes the identity number of the child application, and the virtual server obtains the identity number of the child application included in the child application running request, and determines the download address of the package based on the identity number of the child application. The virtual server generates a package obtaining request based on the download address, transmits the package obtaining request to the target server, and receives the compiled package transmitted by the target server.

In the foregoing embodiments, the package obtained by the virtual server is the same as the package loaded when the child application is started in the second parent application, so that starting the child application in the application program based on the package has a native effect of starting the child application in the second parent application, and there is no need to additionally develop the package of the child application for the application program, thereby reducing the time consumption and the costs of implementing the method for running a child application. In addition, the package is the compiled package, and there is no need to perform a process of compiling based on the source code of the child application, so that efficiency of running the child application in the application program is high, and experience of wakening the child application through the application program is smoother.

In all embodiments of the present disclosure, the downloading the compiled package corresponding to the child application identifier from a target server through the virtual server includes: obtaining a package download address corresponding to the child application identifier from a proxy server through the virtual server; and downloading the compiled package corresponding to the child application identifier from the target server based on the package download address.

The terminal further includes the proxy server, and the proxy server may provide addresses of packages in response to search requests.

In all embodiments of the present disclosure, when obtaining the child application running request, the virtual server transmits an address query request to the proxy server, and the proxy server returns the package download address corresponding to the child application identifier based on the address query request. After obtaining the package download address, the virtual server downloads the compiled package corresponding to the child application identifier from the target server based on the package download address.

In all embodiments of the present disclosure, the child application running request includes the identity number of the child application, and the obtaining a package download address corresponding to the child application identifier from a proxy server through the virtual server includes: generating an address query request corresponding to the identity number through the virtual server; transmitting the address query request to the proxy server, to indicate the proxy server to obtain the package download address corresponding to the child application identifier; and obtaining the package download address that corresponds to the child application identifier and is returned by the proxy server. The package download address corresponding to the child application identifier may be quickly obtained by transmitting the address query request to the proxy server.

In a possible scenario, the virtual server obtains the identity number included in the child application running request, generates the address query request based on the identity number, and transmits the address query request to the proxy server. The proxy server obtains the identity number in the address query request, queries for a version number of the child application identifier based on the identity number, and obtains a package download address corresponding to the version number. The proxy server may transmit the package download address corresponding to the version number to the virtual server, so that the virtual server obtains the package download address corresponding to the child application identifier. The version number may be a latest version number of the child application currently.

In another possible scenario, after obtaining the identity number in the address query request, the proxy server searches for a package list based on the identity number, the package list includes each package download address, and each package download address is a download address of each compiled package needed by starting the child application corresponding to the version number. The proxy server transmits the package list to the virtual server, so that the virtual server may determine the package download address based on the package list.

In all embodiments of the present disclosure, the terminal may include a child application runtime, the child application runtime may be used as an engine that runs the child application in the application program. When the child application is the mini program, the child application runtime may alternatively be denoted as a mini program runtime.

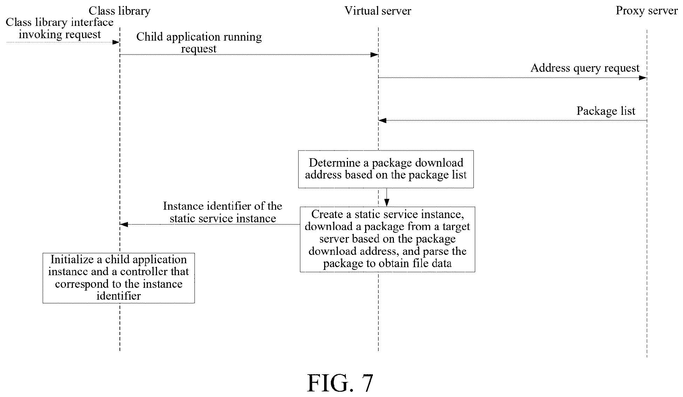

For example, as shown in FIG. 6, the child application runtime includes the application component, the class library, the virtual server, and the proxy server. As shown in FIG. 7, the child application runtime initiates, in response to the trigger operation on the child application identifier, the class library interface invoking request through the application component, the class library initiates the child application running request to the virtual server based on the class library interface invoking request, and the child application running request is configured for initializing the child application.

When obtaining the child application running request, the virtual server transmits the address query request to the proxy server based on the child application running request, the proxy server returns the package list to the virtual server based on the address query request, and the virtual server determines the package download address based on the package list. After determining the package download address, the virtual server creates a static service instance, downloads the package from the target server based on the package download address, and parses the package to obtain the file data, to complete creation of the static service instance. The virtual server returns an instance identifier of the static service instance to the class library. When the class library obtains the instance identifier, a child application instance and a controller that correspond to the instance identifier are initialized, to complete initialization of the child application.

The static service instance is configured for providing the file data obtained by parsing the package, and the child application instance is configured for implementing a function of the child application. For example, the child application instance encapsulates a code injector, and is configured for injecting a custom script to a native component of the child application. The child application instance further encapsulates an event emitter, and may be configured for processing a communication message from the virtual server and the proxy server, emitting an event, and the like. The child application instance further encapsulates a citation utility, and may be configured for citing a specific object of the native component. The controller provides the application program with a capability of controlling the child application, for example, provides a capability of creating, destructing, or restarting the child application.

In the foregoing embodiments, the virtual server obtains the package download address from the proxy server, and then downloads the compiled package corresponding to the package download address from the target server, so that starting the child application in the application program based on the package has a native effect of starting the child application in the second parent application. In addition, there is no need to perform the process of compiling based on the source code of the child application, so that the efficiency of running the child application in the application program is high, and the experience of wakening the child application through the application program is smoother.

In all embodiments of the present disclosure, the running a child application corresponding to the child application identifier in the application program based on the file data includes: initiating a resource request including a virtual resource locator; obtaining, via the virtual server when the resource request is obtained by the virtual server, a child application entry file corresponding to the virtual resource locator, the file provides framework data for execution of the child application; obtaining, from the file data, page resource data for execution of the child application; and running the child application corresponding to the child application identifier in the application program based on the child application entry file and the page resource data.

The resource locator refers to a uniform resource locator (URL), and may be configured to identify a specific location of a resource. The virtual resource locator (virtual URL) points to a location of resources in the virtual server.

The child application entry file is generated by the virtual server. The child application entry file may be understood as a main directory of the child application, and includes, but is not limited to, a basic library, a native component, and a file path that are needed for running the child application. The basic library and the native component that are included in the child application entry file provide a framework needed for running the child application. The file path included in the child application entry file may introduce the response data needed for running the child application, and the response data is page resource data needed for running the child application. The child application may be run through the child application entry file and the response data. In an actual application, the child application entry file may be marked as index.html, namely, the main directory of the child application.

In all embodiments of the present disclosure, the terminal may initiate the resource request through the class library, and when the class library initiates the resource request, an obtaining event is triggered. When the virtual server detects the obtaining event, the virtual server may intercept the resource request initiated by the class library, that is, the resource request is obtained by the virtual server. An action of detecting the obtaining event by the virtual server may be continuously performed, to ensure that the virtual server can intercept the resource request initiated by the class library.

The virtual server obtains the virtual URL included in the resource request, obtains the corresponding child application entry file based on the virtual URL, and returns the child application entry file to the class library, so that the class library obtains the child application entry file. The terminal executes the child application entry file through the class library, and in a process of executing the child application entry file, obtains the response data from the file data of the virtual server based on the file path included in the child application entry file. The class library runs the child application in the application program based on the child application entry file and the response data.

In the foregoing embodiments, the virtual server intercepts the resource request, so that the resource request is not actually transmitted. Instead, the resource request is processed through the virtual server, to obtain the child application entry file. The response data needed for running the child application is obtained through the child application entry file, and the child application is directly run in the application program based on the child application entry file and the response data, thereby greatly reducing operation complexity of running the child application.

In all embodiments of the present disclosure, the initiating a resource request including a virtual resource locator includes: creating an embedded page frame instance, in the embedded page frame instance, a location pointing to an external resource is set to be the virtual resource locator; and initiating, through the embedded page frame instance, the resource request including the virtual resource locator. The embedded page frame instance is created, and the resource request is initiated through the embedded page frame instance, to facilitate subsequent loading of the embedded page frame instance through the obtained data, to embed a page for running the child application into the service page, so that the child application is directly run in the application program, thereby greatly reducing the operation complexity of running the child application.

The embedded page frame instance refers to an iframe instance, iframe is a label of html, and html is a language for describing a web page. The iframe instance may be configured for embedding a page into a page. In this embodiment of this application, the page for running the child application is embedded into the service page by creating the embedded page frame instance.

The location pointing to the external resource is an attribute of the embedded page frame instance, and is configured for defining an address of a document embedded in the iframe instance.

The terminal creates the iframe instance through the class library, and src (the location pointing to the external resource) of the iframe instance is the virtual URL. The class library runs the iframe instance, to initiate the resource request including the virtual URL. The class library may create the iframe instance after initialization of the child application instance and the controller is completed.

In all embodiments of the present disclosure, the obtaining, in the file data, response data needed by the child application entry file includes: initiating, through the embedded page frame instance, a file obtaining request based on the file path included in the child application entry file; and obtaining, via the virtual server in response to the file obtaining request, the page resource data from the file data.

The child application entry file includes the file path. Because the child application entry file is generated by the virtual server, and the file path is a storage path of the file data in the virtual server, the corresponding response data may be searched from the file data in the virtual server based on the file path included in the child application entry file.

The resource request initiated by the class library is intercepted by the virtual server. The virtual server returns the child application entry file based on the virtual URL included in the resource request. The terminal executes the child application entry file through the iframe instance created through the class library, generates the file obtaining request based on the file path included in the child application entry file, and transmits the file obtaining request to the virtual server. After receiving the file obtaining request, the virtual server obtains the corresponding response data from the file data based on the file path included in the file obtaining request, and transmits the response data to the class library. The class library loads the iframe instance based on the child application entry file and the response data, to run the child application in the application program.

In the foregoing embodiments, the child application entry file is executed through the embedded page frame instance, to initiate the file obtaining request including the file path, and the response data corresponding to the file path is obtained from the virtual server. Further, the embedded page frame instance is loaded based on the child application entry file and the response data, to embed the page for running the child application into the service page, so that the child application is directly run in the application program, thereby greatly reducing the operation complexity of running the child application. Because running of the child application involves less data, the child application may be quickly run and started in the application program.

In all embodiments of the present disclosure, after the parsing the package to obtain file data, the method for running a child application further includes: storing the file data in a cache area of the virtual server; and the obtaining page resource data from the file data includes: obtaining the page resource data from the file data in the cache of the virtual server.

In all embodiments of the present disclosure, the package of the child application is downloaded through the virtual server, the package is parsed, and the virtual server stores the file data obtained by parsing the package in the cache area. The terminal transmits the file obtaining request to the virtual server through the class library, and the virtual server obtains the response data corresponding to the file obtaining request in the cache area.

In all embodiments of the present disclosure, the file obtaining request includes the file path. After receiving the file obtaining request, the virtual server obtains the file path included in the file obtaining request, and obtains, based on the file path, the corresponding response data in the file data stored in the cache area.

In the foregoing embodiments, the virtual server stores, in the cache area, the file data obtained by parsing the package, and manages the file data in the cache area. The virtual server serves as a regular service thread of the application program, and provides a resource processing service of the child application for the application program, so that the application program may obtain the data needed for running the child application from the virtual server, to facilitate running of the child application performed by the application program based on the file data in the cache area, thereby directly running the child application in the application program, and greatly reducing the operation complexity of running the child application.

In all embodiments of the present disclosure, the method for running a child application further includes: in response to a failure of obtaining the page resource data from the cache, downloading, via the virtual server, the page resource data from the target server. The resource processing service of the child application is provided for the application program through the virtual server, so that the application program may obtain the data needed for running the child application from the virtual server, thereby directly running the child application in the application program, and greatly reducing the operation complexity of running the child application.

It can be known from the foregoing embodiments that, the response data needed by the child application entry file is obtained in the cache area in a manner in which the file obtaining request is initiated through the file path included in the child application entry file and the response data corresponding to the file path is obtained in the cache area. Therefore, when the response data needed by the child application entry file is not obtained in the cache area, it indicates that the response data corresponding to the file path is missing in the cache area, and it may be that the package is not downloaded successfully or is lost accidentally, and the virtual server may re-download the response data needed by the child application entry file from the target server.

In all embodiments of the present disclosure, the downloading, via the virtual server, the page resource data from the target server includes: downloading a supplementary package from the target server via the virtual server, and parsing the supplementary package to obtain supplementary file data; storing the supplementary file data in the cache of the virtual server; and obtaining the page resource data from the supplementary file data in the cache area.

The virtual server may generate the address query request based on the file path, and transmit the address query request to the proxy server. The proxy server returns a download address of the supplementary package based on the address query request. The virtual server obtains the download address of the supplementary package from the target server. The virtual server downloads the supplementary package from the target server based on the download address of the supplementary package.

The virtual server may generate the address query request based on the file path, to be specific, the virtual server may query the download address of the supplementary package in the package list based on the file path, and generate the address query request based on the file path if the download address of the supplementary package is not found in the package list.

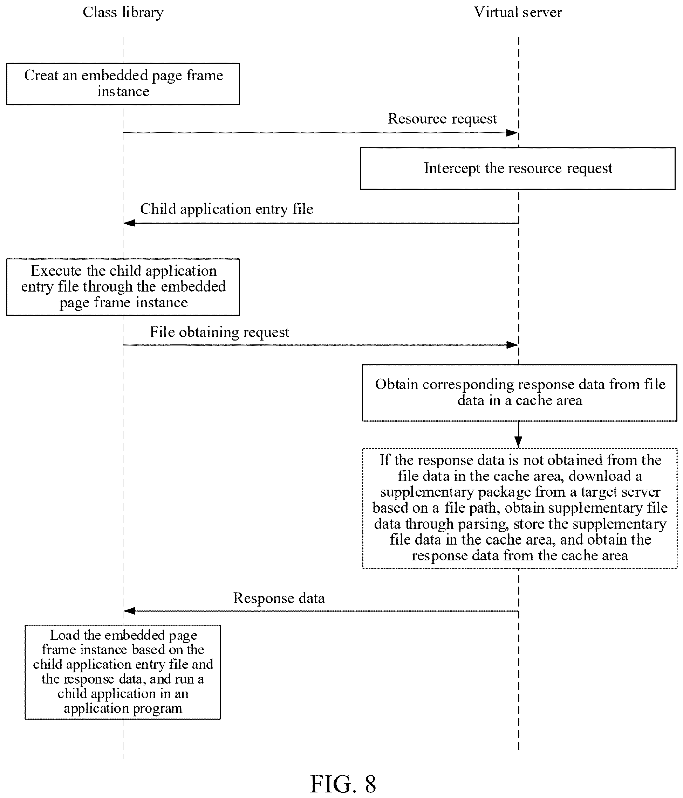

For example, as shown in FIG. 8, after completing initialization of the child application instance and the controller, the class library creates the embedded page frame instance (the iframe instance). The class library runs the iframe instance, to initiate the resource request including the virtual URL. The virtual server intercepts the resource request, and returns the child application entry file based on the resource request. The class library executes the child application entry file through the iframe instance, and initiates the file obtaining request to the virtual server based on the file path included in the child application entry file. The virtual server obtains the corresponding response data from the file data in the cache area based on the file obtaining request, and transmits the response data to the class library. If the virtual server does not obtain the corresponding response data from the file data in the cache area, the virtual server downloads the supplementary package from the target server based on the file path. The virtual server parses the supplementary package to obtain the supplementary file data, stores the supplementary file data to the cache area, obtains the response data corresponding to the file obtaining request in the cache area, and transmits the response data to the class library. The class library loads the iframe instance based on the child application entry file and the response data, to run the child application in the application program.

In the foregoing embodiments, when the virtual server does not obtain the response data in the cache area, the virtual server re-downloads the supplementary package from the target server, and stores the supplementary package in the cache area, so that when the child application needs to be run in the application program subsequently, the needed response data may be directly obtained in the cache area, thereby avoiding repeatedly obtaining the data, reducing resource consumption, and also improving the efficiency of running the child application in the application program.

In all embodiments of the present disclosure, the method for running a child application further includes: obtaining a target identity ticket in response to a target operation, e.g., a target interface invoking operation, triggered in the child application running in the application program, the target identity ticket being a certificate of an identity of a target object in a second parent application; generating a target interface invoking request carrying the target identity ticket; and verifying the target identity ticket through the proxy server, and forwarding the target interface invoking request to the target server when the target identity ticket passed the verification.

The target interface invoking operation is configured to invoke an interface of the target server. In an actual application, invoking the interface of the target server may be for obtaining a communication number bound between the target object and the second parent application, or may be for obtaining a friendship of the target object in the second parent application. An operation implemented by invoking the interface of the target server when the child application is run in the second parent application may alternatively be implemented by invoking the interface of the target server when the child application is run in the application program.

The target identity ticket may reflect identity information of the target object in the second parent application.

When the child application run in the application program needs to invoke the interface of the target server, the initiated target interface invoking request needs to carry the target identity ticket, to facilitate authentication performed by the proxy server based on the target identity ticket, and the target interface invoking request is forwarded to the target server after the authentication succeeds, so that when the target object runs the child application in the application program, the target object may invoke the interface of the target server based on the target identity ticket. Further, the operation executed when the child application is run in the application program may be the same as the operation executed when the child application is run in the second parent application, that is, the operation has a native effect of running the child application in the second parent application.

In all embodiments of the present disclosure, the method for running a child application further includes: obtaining a target identity ticket in response to a login operation triggered in the child application running in the application program, the target identity ticket being a certificate of an identity of a target object in a second parent application; generating a parent application interface invoking request carrying the target identity ticket; and verifying the target identity ticket through the proxy server, and transmitting the parent application interface invoking request to the target server through the proxy server when the target identity ticket passes the verification, the parent application interface invoking request being configured for informing the target server that the target account of the target object in the second parent application logs into the child application.

The target account is an account registered by the target object in the second parent application, that is, the target object may log in to the second parent application through the target account. The login operation refers to logging in to the child application run in the application program through the target account.

The parent application interface invoking request is configured for invoking a parent application interface, and the parent application interface is an interface belonging to the target server.

In all embodiments of the present disclosure, for the child application run in the application program, a main page of the child application includes a login component, and the login operation may be triggered through the login component. When the login operation is triggered through the login component, the login component obtains the target identity ticket of the target object in the second parent application, generates the parent application interface invoking request, and transmits the parent application interface invoking request carrying the target identity ticket to the proxy server. The target identity ticket is verified through the proxy server, and that the verification succeeds indicates that an identity of the target object corresponding to the target identity ticket is legal. Further, the proxy server transmits the parent application interface invoking request to the target server. The target server obtains the target account of the target object in the second parent application in response to the parent application interface invoking request, and logs in to the child application in the application program based on the target account of the target object.

That the target server logs in to the child application in the application program based on the target account of the target object may be that the target server sets a login state of the target object in the child application (run in the application program) as logged in, and transmits post-login page data to the terminal, so that the terminal displays a post-login page of the child application in the application program based on the post-login page data.

For example, the first parent application is the browser, the second parent application is the instant communication application, and the child application is the mini program. In a process of running the mini program in the browser, when the mini program needs to be logged in to in the browser through the target account of the target object in the instant communication application, the target identity ticket of the target object in the instant communication application is obtained. The target identity ticket is authenticated through the proxy server. When the authentication succeeds, the proxy server transmits the parent application interface invoking request to the target server. The target server logs in to the mini program run in the browser through the target account of the target object in the instant communication application.

In the foregoing embodiments, when the child application run in the application program needs to invoke the parent application interface of the target server, the parent application interface invoking request carrying the target identity ticket is generated, the target identity ticket is authenticated through the proxy server, and the parent application interface invoking request is transmitted to the target server when the authentication succeeds, thereby ensuring data security of the target server. In addition, the child application run in the application program may invoke the interface of the target server, so that functions used when the child application is run in the second parent application can all be used when the child application is run in the application program, and the second parent application does not need to participate in this process, thereby reducing the operation complexity of running the child application and improving the efficiency of running the child application.

In all embodiments of the present disclosure, the obtaining the target identity ticket includes: obtaining a service identity ticket of the target object in the service page; and obtaining, via the virtual server, the target identity ticket of the target object in the second parent application corresponding to the service identity ticket.

The virtual server is further configured to manage the ticket. The service identity ticket may be configured for reflecting identity information of the target object on the service page. In an actual application, the identity information of the target object on the service page may be different from the identity information of the target object in the second parent application.

In all embodiments of the present disclosure, the terminal obtains the service identity ticket of the target object on the service page from a service server of the service page, and transmits the service identity ticket to the virtual server. The virtual server determines the target identity ticket of the target object in the second parent application based on the service identity ticket, to exchange for the target identity ticket through the service identity ticket.

In all embodiments of the present disclosure, that the terminal obtains the service identity ticket of the target object on the service page from a service server of the service page may be that, the terminal transmits a ticket obtaining request to the proxy server through a front end of the service page, the proxy server forwards the ticket obtaining request to the service server of the service page, and the service server returns the service identity ticket of the target object on the service page based on the ticket obtaining request, so that the terminal obtains the service identity ticket on the service page.

In all embodiments of the present disclosure, the terminal may obtain the service identity ticket in advance, and exchange for the target identity ticket. For example, the terminal may obtain the service identity ticket of the target object on the service page while initiating the child application running request, and exchange for the target identity ticket based on the service identity ticket; or may obtain the service identity ticket of the target object on the service page after starting the child application in the application program, and exchange for the target identity ticket based on the service identity ticket.

In all embodiments of the present disclosure, service identity tickets of the target object on different service pages are different. The target identity tickets exchanged for based on the different service identity tickets of the target object are the same, so that when running the child application on different service pages, the target object may invoke the interface of the target server through the same target identity tickets.

In all embodiments of the present disclosure, the method for running a child application further includes: obtaining a validity period ticket corresponding to the target identity ticket; and the generating a parent application interface invoking request carrying the target identity ticket includes: generating the parent application interface invoking request after the target identity ticket is determined to be valid based on the validity period ticket.

In all embodiments of the present disclosure, the method for running a child application further includes: when it is determined, based on the validity period ticket, that the target identity ticket is invalid, obtaining an updated target identity ticket based on the validity period ticket; and generating a parent application interface invoking request carrying the updated target identity ticket.

In all embodiments of the present disclosure, while the target identity ticket of the target object in the second parent application is obtained through the virtual server, the validity period ticket corresponding to the target identity ticket may further be obtained. The validity period ticket includes effective duration corresponding to the target identity ticket. Before generating the parent application interface invoking request carrying the target identity ticket, the terminal may first determine, based on the validity period ticket, whether the target identity ticket is valid. If duration between a current moment and a moment at which the target identity ticket is obtained is less than or equal to the effective duration, it is determined that the target identity ticket is valid, so that the parent application interface invoking request carrying the target identity ticket is generated. If duration between a current moment and a moment at which the target identity ticket is obtained is greater than the effective duration, it is determined that the target identity ticket is invalid, so that the validity period ticket is transmitted to the virtual server. The updated target identity ticket is obtained through the virtual server, and the terminal may generate the parent application interface invoking request carrying the updated target identity ticket.

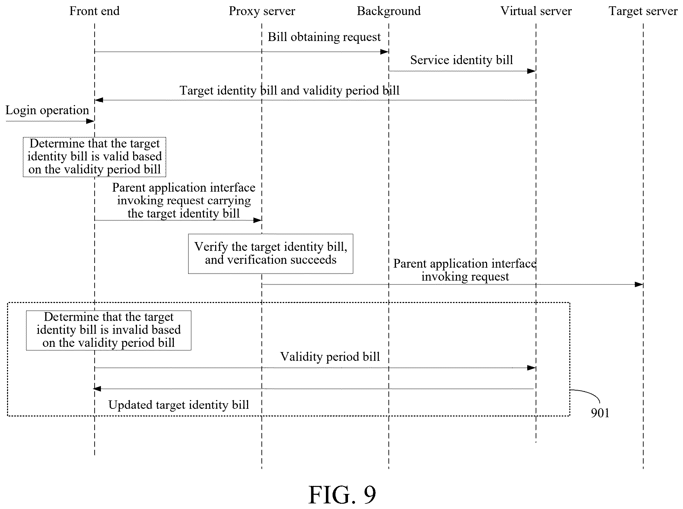

For example, as shown in FIG. 9, the terminal obtains the service identity ticket of the target object on the service page, and initiates the ticket obtaining request through the front end of the service page. A background of the service page obtains the service identity ticket based on the ticket obtaining request, and transmits the service identity ticket to the virtual server. The virtual server returns the target identity ticket and the corresponding validity period ticket to the application component based on the service identity ticket. The front end generates, in response to the login operation triggered on the child application and when it is determined, based on the validity period ticket, that the target identity ticket is valid, the parent application interface invoking request carrying the target identity ticket; transmits the parent application interface invoking request carrying the target identity ticket to the proxy server; verifies the target identity ticket through the proxy server; and transmits the parent application interface invoking request to the target server through the proxy server when the verification succeeds, to login to the child application through the target account. When it is determined, based on the validity period ticket, that the target identity ticket is invalid (content in a dashed-line box 901 in FIG. 9), the validity period ticket is transmitted to the virtual server through the front end, the virtual server returns the updated target identity ticket to the application component, and the invalid target identity ticket is replaced with the updated target identity ticket, to facilitate login to the child application by the front end through the target account based on the updated target identity ticket.

In the foregoing embodiments, the target identity ticket of the target object in the second parent application is exchanged for through the virtual server based on the service identity ticket of the target object on the service page, to facilitate subsequent invoking of the interface of the target server through the target identity ticket.

In all embodiments of the present disclosure, the method for running a child application further includes: transmitting, via the proxy server, a service interface invoking request to the service server in response to a service interface invoking operation triggered in the child application run in the application program, the service interface invoking request being configured for obtaining service data from the service server; and receiving the service data, and displaying a service subpage corresponding to the service data in the child application.

The service interface invoking request is configured for invoking a service interface, and the service interface is an interface belonging to the service server.

The service data is data obtained from the service interface, and is configured for displaying the service sub-page of the child application. The service sub-page may be a secondary page of the child application. For example, the service sub-page may be entered through the main page of the child application, that is, compared with the main page, the service sub-page is the secondary page.

In all embodiments of the present disclosure, the main page of the child application includes a sub service entry component. In response to the service interface invoking operation triggered for the sub service entry component of the child application, the service interface invoking request is generated through the class library. The class library transmits the service interface invoking request to the proxy server. The proxy server forwards the service interface invoking request to the service server. The service server obtains the corresponding service data in response to the service interface invoking request, transmits the service data to the proxy server, and returns the service data to the class library through the proxy server. The class library displays the service sub-page based on the service data.

In all embodiments of the present disclosure, the main page of the child application includes a plurality of sub service entry components. Different service sub-pages may be respectively entered through the sub service entry components, and service data needed for displaying the different service sub-pages is also different. The service interface invoking request includes a page identifier of the service sub-page. The service server obtains the corresponding service data based on the page identifier, so that the class library may display the service sub-page corresponding to the page identifier based on the service data.

In all embodiments of the present disclosure, the page identifier is associated with the sub service entry component. When the sub service entry component is triggered, the page identifier associated with the sub service entry component is obtained through the class library. The class library generates the service interface invoking request based on the page identifier, and forwards the service interface invoking request to the service server through the proxy server. The service server obtains the page identifier included in the service interface invoking request, and obtains the corresponding service data based on the page identifier.

In the foregoing embodiments, when the child application run in the application program needs to obtain the service data, because the application program and the service server belong to different autonomous systems, the service interface invoking request is forwarded to the service server through the proxy server, to obtain the service data. The service sub-page is displayed through the service data. A limitation that the application program cannot invoke an interface across systems is resolved through the proxy server, so that the child application run in the application program may invoke the interface of the service server. Further, functions in which the service server needs to participate in the child application can all be normally used.

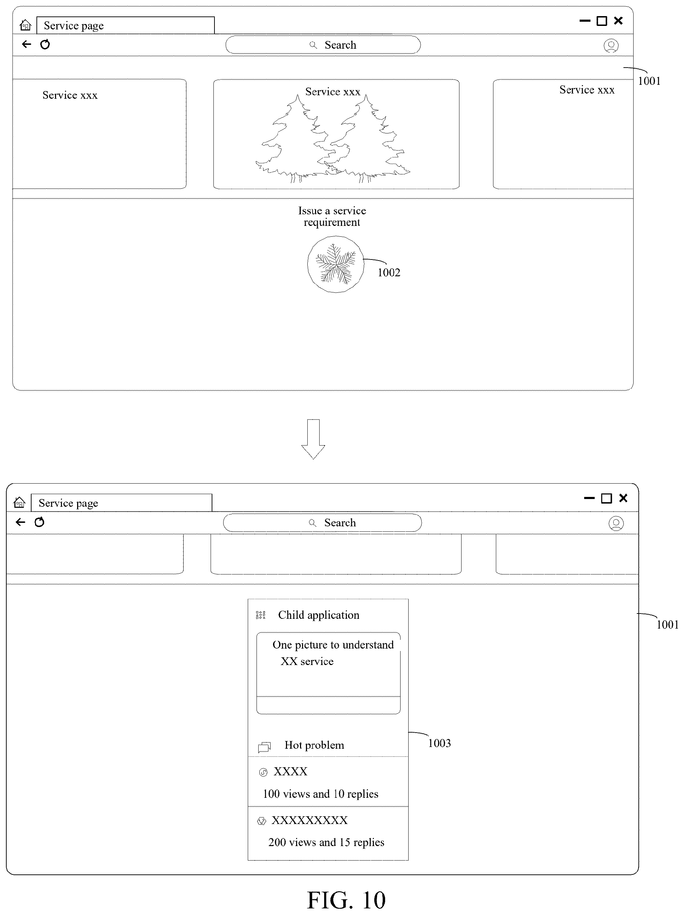

In all embodiments of the present disclosure, a method for running a child application may be applied to a scenario in which a mini program is run in a browser. As shown in FIG. 10, in a process of executing a service through a service page 1001 of the browser, a service requirement needs to be issued through the mini program corresponding to the service page 1001. The service page 1001 includes a mini program identifier (a child application identifier) 1002. When the mini program identifier 1002 is triggered, a sub-page is displayed on the service page 1001, a child application running request is initiated, a compiled package is obtained through a virtual server, and the package is parsed to obtain file data. The mini program is run in the browser based on the file data, and a main page 1003 of the mini program is displayed through the sub-page of the service page.

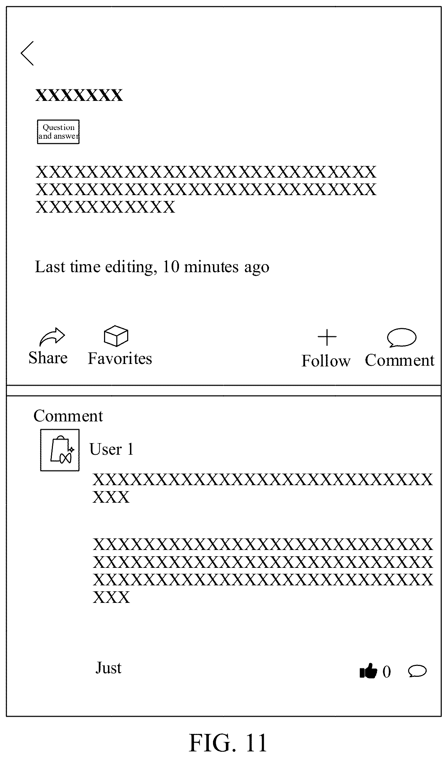

The main page 1003 of a child application run in an application program includes sub service entry components. A sub service entry component 1004 is an entry component of a problem detail page. A service interface invoking request is generated in response to a service interface invoking operation triggered on the sub service entry component 1004, and the service interface invoking request includes a page identifier of the problem detail page. The service interface invoking request is transmitted to a service server through a proxy server, and the service server obtains service data of the problem detail page through the page identifier, transmits the service data of the problem detail page to the proxy server, and returns the service data to a class library through the proxy server. The class library displays the problem detail page based on the service data, and the problem detail page is shown in FIG. 11.

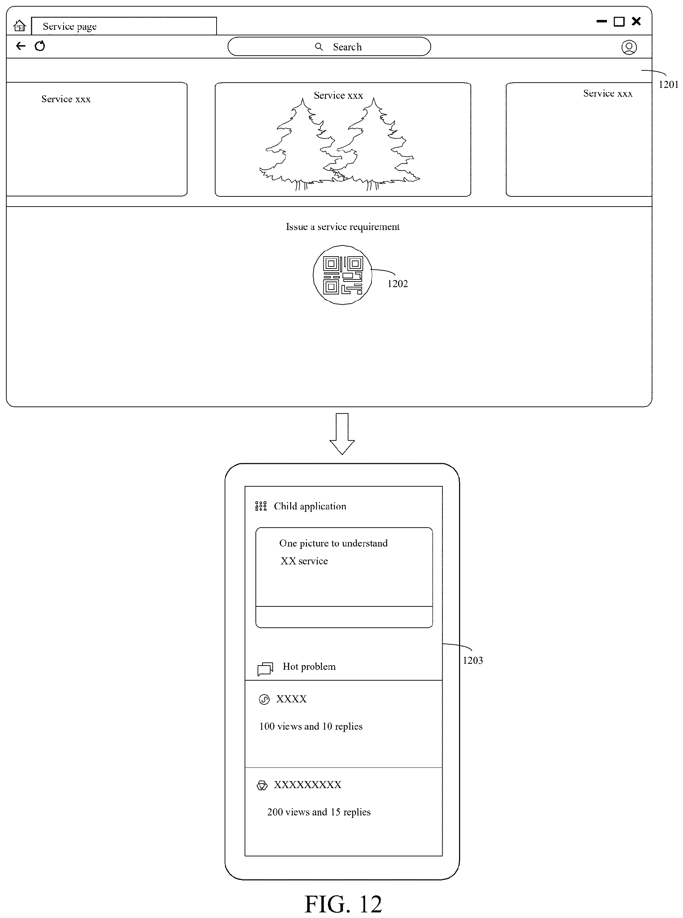

In the related art, as shown in FIG. 12, a terminal runs a browser, displays a service page 1201 through the browser, and executes a service on the service page 1201. When the service executed on the service page 1201 needs to complete at least one link through a mini program, a graphic code 1202 of the mini program may be displayed on the service page 1201, the graphic code 1202 is scanned through a second parent application run on a mobile device (for example, a mobile phone), and a main page 1203 of the mini program is displayed in the second parent application.

In the embodiments of this application, the child application may be directly run through the application program. Compared with the related art, operation complexity of running the child application is greatly reduced.

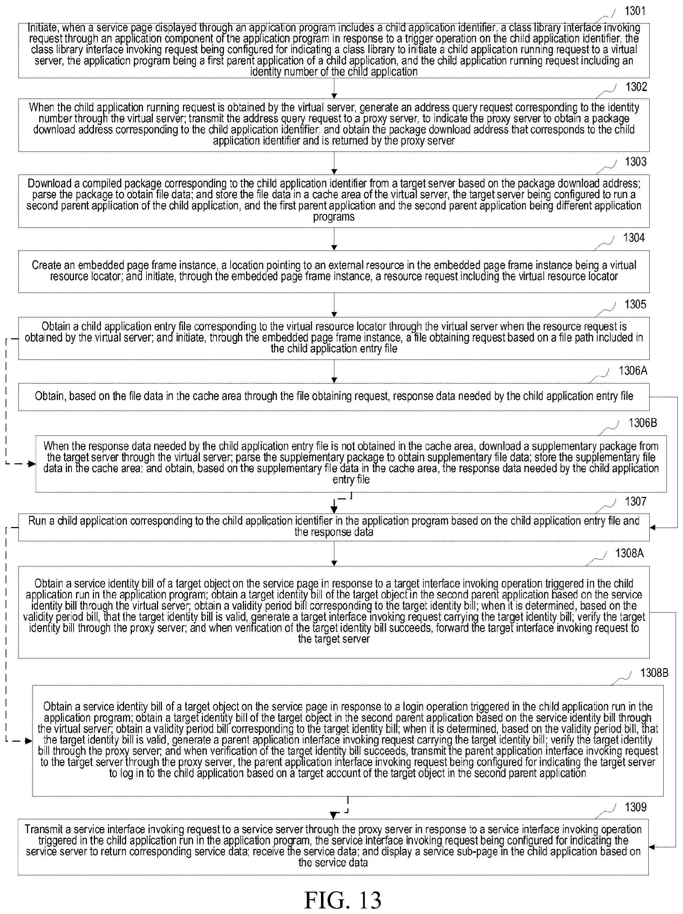

In all embodiments of the present disclosure, as shown in FIG. 13, a method for running a child application includes the following operations.

Operation 1301: Initiate, when a service page displayed through an application program includes a child application identifier, a class library interface invoking request through an application component of the application program in response to a trigger operation on the child application identifier, the class library interface invoking request being configured for indicating a class library to initiate a child application running request to a virtual server, the application program being a first parent application of a child application, and the child application running request including an identity number of the child application.

Operation 1302: When the child application running request is obtained by the virtual server, generate an address query request corresponding to the identity number through the virtual server; transmit the address query request to a proxy server, to indicate the proxy server to obtain a package download address corresponding to the child application identifier; and obtain the package download address that corresponds to the child application identifier and is returned by the proxy server.

Operation 1303: Download a compiled package corresponding to the child application identifier from a target server based on the package download address; parse the package to obtain file data; and store the file data in a cache area of the virtual server, the target server being configured to run a second parent application of the child application, and the first parent application and the second parent application being different application programs.

Operation 1304: Create an embedded page frame instance, a location pointing to an external resource in the embedded page frame instance being a virtual resource locator; and initiate, through the embedded page frame instance, a resource request including the virtual resource locator.

Operation 1305: Obtain a child application entry file corresponding to the virtual resource locator through the virtual server when the resource request is obtained by the virtual server; and initiate, through the embedded page frame instance, a file obtaining request based on a file path included in the child application entry file.

Operation 1306A: Obtain, based on the file data in the cache area through the file obtaining request, response data needed by the child application entry file.

Operation 1306B: When the response data needed by the child application entry file is not obtained in the cache area, download a supplementary package from the target server through the virtual server; parse the supplementary package to obtain supplementary file data; store the supplementary file data in the cache area; and obtain, based on the supplementary file data in the cache area, the response data needed by the child application entry file.

Operation 1307: Run a child application corresponding to the child application identifier in the application program based on the child application entry file and the response data.

Operation 1308A: Obtain a service identity ticket of a target object on the service page in response to a target interface invoking operation triggered in the child application run in the application program; obtain a target identity ticket of the target object in the second parent application based on the service identity ticket through the virtual server; obtain a validity period ticket corresponding to the target identity ticket; when it is determined, based on the validity period ticket, that the target identity ticket is valid, generate a target interface invoking request carrying the target identity ticket; verify the target identity ticket through the proxy server; and when verification of the target identity ticket succeeds, forward the target interface invoking request to the target server.

Operation 1308B: Obtain a service identity ticket of a target object on the service page in response to a login operation triggered in the child application run in the application program; obtain a target identity ticket of the target object in the second parent application based on the service identity ticket through the virtual server; obtain the validity period ticket corresponding to the target identity ticket; when it is determined, based on the validity period ticket, that the target identity ticket is valid, generate a parent application interface invoking request carrying the target identity ticket; verify the target identity ticket through the proxy server; and when verification of the target identity ticket succeeds, transmit the parent application interface invoking request to the target server through the proxy server, the parent application interface invoking request being configured for indicating the target server to log in to the child application based on a target account of the target object in the second parent application.

Operation 1309: Transmit a service interface invoking request to a service server through the proxy server in response to a service interface invoking operation triggered in the child application run in the application program, the service interface invoking request being configured for indicating the service server to return corresponding service data; receive the service data; and display a service sub-page in the child application based on the service data.

In the foregoing method for running a child application, the child application identifier is displayed on the service page of the application program, and in response to the trigger operation on the child application identifier, the child application running request is initiated. When the child application running request is obtained by the virtual server, the compiled package corresponding to the child application identifier is obtained through the virtual server, the package is parsed to obtain the file data, and the child application is run in the application program through the file data. In other words, the child application may be directly run in the application program by triggering the child application identifier on the service page of the application program. Compared with a solution in the related art in which a mobile device scans a graphic code of the child application displayed in the application program and the child application is run in the mobile device, the child application is directly run in the application program, which greatly reduces operation complexity of running the child application and improves efficiency of running the child application. In addition, because the virtual server obtains the compiled package, the virtual server may directly parse the package, and run, through the file data obtained through parsing, the child application without executing a compiling process, so that efficiency of running the child application in the application program is high, and a process of wakening the child application through the application program is smoother.

Although the operations in the flowcharts involved in the embodiments are shown in sequence as indicated by the arrows, the operations are not necessarily executed in sequence indicated by the arrows. Unless explicitly descriptions in this specification, there is no strict sequence restriction on the execution of the operations, and the operations can be executed in another sequence. In addition, at least some of the operations in the flowcharts involved in embodiments may include a plurality of operations or phases. The operations or phases are not necessarily executed at the same time, but may be executed at different times. The execution sequence of the operations or phases is not necessarily in sequence, but may be executed in turn or alternately with another operation or at least part of the operation or phases in another operation.

Based on a similar concept, the embodiments of this application further provide an apparatus for running a child application that is configured to implement the foregoing method for running a child application. The implementation solution provided by the apparatus to solve the problem is similar to the implementation solution recorded in the foregoing method. Therefore, for examples of specific limitations in one or more apparatus embodiments for running a child application provided below, reference can be made to the foregoing method for running a child application.

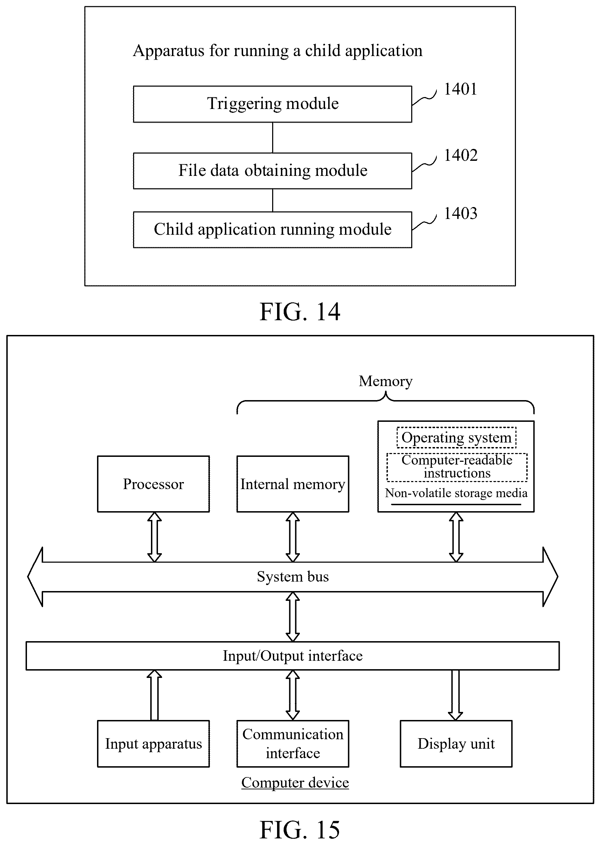

In an embodiment, as shown in FIG. 14, an apparatus for running a child application is provided, including a triggering module 1401, a file data obtaining module 1402, and a child application running module 1403.

The triggering module 1401 is configured to: initiate, when a service page displayed through an application program includes a child application identifier, a child application running request in response to a trigger operation on the child application identifier.

The file data obtaining module 1402 is configured to: when the child application running request is obtained by a virtual server, obtain a compiled package corresponding to the child application identifier through the virtual server, and parse the package to obtain file data.

The child application running module 1403 is configured to run a child application corresponding to the child application identifier in the application program based on the file data.

In all embodiments of the present disclosure, the triggering module 1401 is further configured to initiate a class library interface invoking request through an application component of the application program in response to the trigger operation on the child application identifier, the class library interface invoking request being configured for indicating a class library to initiate the child application running request to the virtual server.

In all embodiments of the present disclosure, the application program is a first parent application of the child application, the file data obtaining module 1402 includes a package downloading unit, and the package downloading unit is configured to download the compiled package corresponding to the child application identifier from a target server through the virtual server, the target server being configured to run a second parent application of the child application, and the first parent application and the second parent application being different application programs.

In all embodiments of the present disclosure, the package downloading unit is further configured to: obtain a package download address corresponding to the child application identifier from a proxy server through the virtual server; and download the compiled package corresponding to the child application identifier from the target server based on the package download address.

In all embodiments of the present disclosure, the child application running request includes an identity number of the child application, and the package downloading unit is further configured to: generate an address query request corresponding to the identity number through the virtual server; transmit the address query request to the proxy server, to indicate the proxy server to obtain the package download address corresponding to the child application identifier; and obtain the package download address that corresponds to the child application identifier and is returned by the proxy server.

In all embodiments of the present disclosure, the child application running module 1403 includes:
a resource request transmitting unit, configured to initiate a resource request including a virtual resource locator;
a child application entry file obtaining unit, configured to obtain a child application entry file corresponding to the virtual resource locator through the virtual server when the resource request is obtained by the virtual server;
a response data obtaining unit, configured to: obtain, in the file data, response data needed by the child application entry file; and
a running unit, configured to run the child application corresponding to the child application identifier in the application program based on the child application entry file and the response data.

In all embodiments of the present disclosure, the resource request transmitting unit is further configured to: create an embedded page frame instance, a location pointing to an external resource in the embedded page frame instance being the virtual resource locator; and initiate, through the embedded page frame instance, the resource request including the virtual resource locator, and the response data obtaining unit is further configured to: initiate, through the embedded page frame instance, a file obtaining request based on a file path included in the child application entry file; and obtain, in the file data through the file obtaining request, the response data needed by the child application entry file.

In all embodiments of the present disclosure, the file data obtaining module 1402 is further configured to store the file data in a cache area of the virtual server, and the response data obtaining unit is further configured to: obtain, based on the file data in the cache area, the response data needed by the child application entry file.

In all embodiments of the present disclosure, the response data obtaining unit is further configured to: when the response data needed by the child application entry file is not obtained in the cache area, download, from the target server through the virtual server, the response data needed by the child application entry file.

In all embodiments of the present disclosure, the response data obtaining unit is further configured to: download a supplementary package from the target server through the virtual server, and parse the supplementary package to obtain supplementary file data; store the supplementary file data in the cache area; and obtain, based on the supplementary file data in the cache area, the response data needed by the child application entry file.

In all embodiments of the present disclosure, the apparatus for running a child application further includes: an interface invoking module, configured to: obtain a target identity ticket in response to a target interface invoking operation triggered in the child application run in the application program, the target identity ticket being an identity ticket of a target object in the second parent application; generate a target interface invoking request carrying the target identity ticket; and verify the target identity ticket through the proxy server, and forward the target interface invoking request to the target server when verification of the target identity ticket succeeds.

In all embodiments of the present disclosure, the apparatus for running a child application further includes: a login module, configured to: obtain a target identity ticket in response to a login operation triggered in the child application run in the application program, the target identity ticket being an identity ticket of a target object in the second parent application; generate a parent application interface invoking request carrying the target identity ticket; and verify the target identity ticket through the proxy server, and transmit the parent application interface invoking request to the target server through the proxy server when verification of the target identity ticket succeeds, the parent application interface invoking request being configured for indicating the target server to log in to the child application based on a target account of the target object in the second parent application.

In all embodiments of the present disclosure, the login module is further configured to: obtain a service identity ticket of the target object on the service page; and obtain the target identity ticket of the target object in the second parent application based on the service identity ticket through the virtual server.

In all embodiments of the present disclosure, the apparatus for running a child application further includes a ticket validity verification module, configured to obtain a validity period ticket corresponding to the target identity ticket; and the generating a parent application interface invoking request carrying the target identity ticket includes: generating, when it is determined, based on the validity period ticket, that the target identity ticket is valid, the parent application interface invoking request carrying the target identity ticket.

In all embodiments of the present disclosure, the apparatus for running a child application further includes a service sub-page display module 1401, configured to: transmit a service interface invoking request to a service server through the proxy server in response to a service interface invoking operation triggered in the child application run in the application program, the service interface invoking request being configured for indicating the service server to return corresponding service data; and receive the service data, and display a service sub-page in the child application based on the service data.

All or a part of each module of the apparatus for running a child application may be implemented through software, hardware, and a combination of the software and the hardware thereof. Each module may be embedded in or independent of the processor of the computer device in a form of the hardware, or may be stored in the memory of the computer device in a form of the software, to enable the processor to execute operations corresponding to the modules.

In an embodiment, a computer device is provided. The computer device may be a terminal, and an internal structure may be shown in FIG. 15. The computer device includes a processor, a memory, an input/output interface, a communication interface, a display unit and an input apparatus. The processor, the memory, and the input/output interface are connected through a system bus. The communication interface, the display unit and the input apparatus are connected to the system bus through the input/output interface. The processor of the computer device is configured to provide a computing and control capability. The memory of the computer device includes a non-volatile storage media and an internal memory. The non-volatile storage media stores an operating system and a computer program. The internal memory provides an environment for execution of the operating system and the computer program in the non-volatile storage media. The input/output interface of the computer device is configured to exchange information between the processor and an external device. The communication interface of the computer device is configured to communication with an external terminal in a wired or wireless manner. The wireless manner may be implemented through Wi-Fi, a mobile cellular network, NFC (near field communication) or another technology. When the computer program is executed by the processor, the method for running a child application is implemented. The display unit of the computer device is configured to form a visually visible picture and may be a display screen, a projection device or a virtual reality imaging device. The display screen may be a liquid crystal display or an electronic ink display. The input device of the computer device may be a touch layer covered on the display screen, or may alternatively be a button, a trackball or a touch pad provided on a computer device shell, or may alternatively be an external keyboard, a touch pad or a mouse.

A person skilled in the art may understand that, the structures shown in FIG. 15 are merely block diagrams of some structures related to solutions of this application, and may not constitute limitation on the computer device to which the solutions of this application is applied. A specific computer device may include more or fewer components than those shown in the figure, or some components may be combined, or a different component deployment may be used.

In an embodiment, a computer device is provided, including a memory and one or more processors, the memory storing computer-readable instructions, and the computer-readable instructions, when executed by the processor, causing the one or more processors to implement the foregoing method for running a child application.

In an embodiment, one or more non-volatile readable storage media are provided, having computer-readable instructions stored therein, and the computer-readable instructions, when executed by the processor, causing one or more processors to implement the foregoing method for running a child application.

In an embodiment, a computer program product is provided, including computer-readable instructions, and the computer-readable instructions, when executed by a processor, implementing the foregoing method for running a child application.

User information (including but not limited to user equipment information, user personal information, and the like) and data (including but not limited to data for analysis, stored data, displayed data, and the like) involved in this application both are information and data authorized by the user or fully authorized by all parties, and the collection, use and processing of relevant data need to comply with the related laws, regulations and standards of related countries and regions.

A person of ordinary skill in the art may understand that all or some of the processes of the methods in the embodiments may be implemented by indicating related hardware through a computer program. The computer program may be stored in a non-volatile computer-readable storage medium, such as a non-transitory computer-readable storage medium. When the computer program is executed, the computer-readable instructions may include the processes of the foregoing method embodiments. Any reference to the memory, the database or another media used in embodiments provided by this application may include at least one of the non-volatile memory and the volatile memory. The non-volatile memory can include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phasechange memory (PCM), a graphene memory, and the like. The volatile memory may include a random access memory (RAM), an external cache memory, or the like. For description and not a limitation, the RAM may be in various forms, such as a static random access memory (SRAM), or a dynamic random access memory (DRAM). The databases involved in the various embodiments provided by this application may include at least one of a relational database and a non-relational database. The non-relational databases may include a blockchain-based distributed databases, and the like. This is not limited. The processors involved in embodiments provided by this application may be a general-purpose processor, a central processing unit, a graphics processor, a digital signal processor, a programmable logic device, a quantum computing-based data processing logic device, and the like. This is not limited.

Technical features of foregoing embodiments may be combined in different manners to form other embodiments. For ease of description, not all possible combinations of the technical features in embodiments are described. However, as long as there is no contradiction in the combinations of these technical features, it is to be considered to be within the scope of this application.

Embodiments only describe several implementations of this application, and the descriptions are specific and detailed, but is not to be understood as limitations of the patent scope of this application. A person of ordinary skill in the art can further make several improvements and refinements without departing from the concept of this application, and the modifications and improvements shall fall within the protection scope of this application. Therefore, the protection scope of this application shall be subject to the attached claims.

## Claims

1. A method for running a child application within a first parent application on a terminal, performed by a terminal, comprising:
displaying, via a first parent application on a terminal, a service page including an entry of a child application;
initiating, in response to a user operation on the entry of the child application, a request to run the child application;
in response to the request,
obtaining, via a virtual server configured in the terminal, a compiled application package corresponding to the child application; and
parsing, via the virtual server, the compiled application package to obtain file data associated with the child application;
running the child application in the first parent application based on the file data.

2. The method according to claim 1, wherein the initiating comprises:
invoking, through an application component of the first parent application, a class library configured in the terminal to initiate the request to the virtual server, the class library is encapsulated with methods for running the child application.

3. The method according to claim 1 or 2, wherein the child application is a mini program, and the obtaining comprises:
downloading, via the virtual server, the compiled application package from a target server, the target server is configured to provide services for a second parent application on the terminal, the first parent application and the second parent application being different application programs.

4. The method according to claim 3, wherein the downloading comprises:
obtaining, through the virtual server, a package download address corresponding to the child application from a proxy server configured in the terminal for providing addresses of packages; and
downloading the compiled application package corresponding to the child application from the target server using the package download address.

5. The method according to claim 4, wherein the request comprises an identity of the child application, and the obtaining through the virtual server a package download address corresponding to the child application from a proxy server comprises:
generating, through the virtual server, an address query request corresponding to the identity;
transmitting the address query request to the proxy server, to obtain the package download address corresponding to the child application; and
obtaining the package download address returned by the proxy server.

6. The method according to any one of claims 1 to 5, wherein the running the child application comprises:
initiating a resource request including a virtual resource locator pointing to a location in the virtual server;
obtaining, via the virtual server in response to the resource request, a file corresponding to the virtual resource locator, the file providing framework data for execution of the child application;
obtaining, from the file data, page resource data for execution of the child application; and
running the child application in the first parent application based on the file and the page resource data.

7. The method according to claim 6, wherein the initiating a resource request comprising a virtual resource locator comprises:
creating an embedded page frame instance which includes the virtual resource locator at a location pointing to external resources; and
initiating, through the embedded page frame instance, the resource request comprising the virtual resource locator.

8. The method according to claim 7, wherein the obtaining, from the file data, the page resource data comprises:
initiating, through the embedded page frame instance, a file obtaining request based on a file path included in the file; and
obtaining, via the virtual server, the page resource data from the file data.

9. The method according to claim 5, further comprises: after parsing the compiled application package,
storing the file data in a cache of the virtual server; and
the obtaining the page resource data from the file data comprises:
obtaining the page resource data from the file data in the cache of the virtual server.

10. The method according to claim 9, further comprising:
in response to a failure of obtaining the page resource data from the cache, downloading, via the virtual server, the page resource data from the target server.

11. The method according to claim 9, wherein the downloading, through the virtual server, the page resource data from the target server comprises:
downloading, via the virtual server, a supplementary package from the target server, and parsing the supplementary package to obtain supplementary file data;
storing the supplementary file data in the cache of the virtual server; and
obtaining the page resource data from the supplementary file data in the cache of the virtual server.

12. The method according to any one of claims 1 to 10, further comprising:
obtaining an identity ticket in response to a target operation triggered in the child application, the identity ticket being a certificate of an identity of a target object in a second parent application;
generating a target interface invoking request including the identity ticket;
verifying the identity ticket through a proxy server configured in the terminal; and
forwarding the target interface invoking request to the target server after the identity ticket is verified.

13. The method according to any one of claims 1 to 10, further comprising:
obtaining an identity ticket in response to a login operation triggered in the child application, the identity ticket being a certificate of an identity of a target object in a second parent application;
generating a parent application interface invoking request including the identity ticket;
verifying the identity ticket through a proxy server configured in the terminal;
transmitting, via the proxy server, the parent application interface invoking request to the target server after the identity ticket is verified, the parent application interface invoking request informing a target server that a target account of the target object in the second parent application logs into the child application.

14. The method according to claim 12 or 13, wherein the obtaining an identity ticket comprises:
obtaining a service ticket of the target object in the service page; and
obtaining, via the virtual server, the identity ticket of the target object in the second parent application corresponding to the service ticket.

15. The method according to claim 13, further comprising:
obtaining a validity period ticket corresponding to the identity ticket, wherein
the generating a parent application interface invoking request comprises:
generating the parent application interface invoking request after the identity ticket is determined to be valid based on the validity period ticket.

16. The method according to any one of claims 1 to 15, further comprising:
transmitting, via a proxy server configured in the terminal, a service interface invoking request to a service server in response to a service interface invoking operation triggered in the child application, the service interface invoking request being for obtaining service data from the service server; and
receiving the service data, and displaying a service subpage corresponding to the service data in the child application.

17. An apparatus for running a child application, the apparatus comprising:
a triggering module, configured to: display, via a first parent application on a terminal, a service page including an entry of a child application; initiate, in response to a user operation on the entry of the child application, a request to run the child application;
a file data obtaining module, configured to: obtain, via a virtual server configured in the terminal, a compiled application package corresponding to the child application; parse, via the virtual server, the compiled application package to obtain file data associated with the child application; and
a child application running module, configured to run the child application in the first parent application based on the file data.

18. A computer device, comprising a memory and one or more processors, the memory having computer-readable instructions stored therein, and the computer-readable instructions, when executed by the processor, causing the one or more processors to perform operations of the method according to any one of claims 1 to 16.

19. One or more non-volatile readable storage media, having computer-readable instructions stored therein, the computer-readable instructions, when executed by a processor, causing one or more processors to implement operations of the method according to any one of claims 1 to 16.

20. A computer program product, comprising computer-readable instructions, the computer-readable instructions, when executed by a processor, implementing operations of the method according to any one of claims 1 to 16.
